(19) Europäisches Patentamt
European Patent Office
Office européen des brevets

(11) **EP 3 120 112 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **15711426.5**

(22) Anmeldetag: **13.03.2015**

(51) Int Cl.:
*G01D 3/02* (2006.01)　　*G05B 19/042* (2006.01)

(86) Internationale Anmeldenummer:
**PCT/EP2015/000555**

(87) Internationale Veröffentlichungsnummer:
**WO 2015/139828 (24.09.2015 Gazette 2015/38)**

(54) **VERFAHREN ZUR ERFASSUNG EINER ZEITLICH VERÄNDERLICHEN PHYSIKALISCHEN MESSGRÖSSE UND KORRESPONDIERENDE MESSEINRICHTUNG UND MESSWERT-VERARBEITUNGSVORRICHTUNG**

METHOD FOR MEASURING A TIME-VARIABLE PHYSICAL MEASUREMENT VARIABLE AND CORRESPONDING MEASURING DEVICE AND MEASUREMENT VALUE PROCESSING DEVICE

PROCÉDÉ POUR DÉTERMINER UNE GRANDEUR DE MESURE PHYSIQUE VARIABLE DANS LE TEMPS, DISPOSITIF DE MESURE CORRESPONDANT ET DISPOSITIF DE TRAITEMENT DE VALEURS DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2014 DE 102014003776**

(43) Veröffentlichungstag der Anmeldung:
**25.01.2017 Patentblatt 2017/04**

(73) Patentinhaber: **Schneider Electric Automation GmbH**
**97828 Marktheidenfeld (DE)**

(72) Erfinder: **HAN, Zhaoqiang**
**77933 Lahr (DE)**

(74) Vertreter: **Börjes-Pestalozza, Henrich et al**
**Maucher Jenkins**
**Patent- und Rechtsanwälte**
**Urachstraße 23**
**79102 Freiburg im Breisgau (DE)**

(56) Entgegenhaltungen:
EP-A2- 1 098 236　　　DE-A1-102005 041 912
DE-A1-102006 008 634　　DE-A1-102011 005 128

**Beschreibung**

Die Erfindung betrifft ein Verfahren zur Erfassung einer zeitlich veränderlichen physikalischen Messgröße, wobei zu einer Abfolge von Messzeitpunkten jeweils ein Messwert der Messgröße mit einem Messsensor gemessen wird und zu den Messwerten jeweils ein Übertragungswert gebildet und über eine Signalstrecke an eine Verarbeitungseinheit übermittelt wird.

Es ist bekannt, Messgrößen an einem Messort zu messen und zur weiteren Verarbeitung an einen unter Umständen entfernten Ort zu übertragen. So werden digitale Encoder in der Antriebstechnik vermehrt verwendet, um eine Positionsinformation als direkten Messwert oder eine Geschwindigkeits- oder Beschleunigungsinformation als direkten Messwert oder abgeleiteten Messwert einer Messgröße an die Antriebssteuerung zu bereitzustellen. Die Position und die Geschwindigkeit werden hierbei mit einem Prozessor des Encoders ermittelt und anschließend von dem Encoder an die Antriebssteuerung über eine serielle Kommunikationsschnittstelle mit einem Protokoll wie beispielsweise EnDat, SSI und BISS übertragen.

Die Position und die Geschwindigkeit werden im Encoder mit einer Abtastfrequenz bestimmt, die höher als die Abtastrate in der Steuerung ist, um die Zeitverzögerung der gemessenen Position bzw. Geschwindigkeit zu reduzieren. Die Prozessoren im digitalen Encoder und in der Steuerung sind jedoch nicht miteinander synchronisiert. Zusätzlich erzeugt die Kommunikation zwischen den Prozessoren eine weitere Zeitverzögerung für die ermittelte Position oder Geschwindigkeit. Weiter wird zwar die Position aus den Messsignalen im Encoder direkt bestimmt, die Geschwindigkeit erfordert jedoch eine Berechnung aus der ermittelten Position mit Phasenregelschleifen (PLL) oder Differenzmethoden. Dies führt zu weiteren Zeitverzögerungen für die gemessene Geschwindigkeit. Die Zeitverzögerungen in der Ermittlung der Position und der Geschwindigkeit führen zu einer Desynchronisierung zwischen dem Encoder und der Steuerung, die die Leistung des gesamten Antriebssteuerungssystems verschlechtern und begrenzen.

Die Erfindung betrifft weiter eine Messeinrichtung mit einem Messsensor, wobei der Messsensor zu einer Messung von Messwerten einer zeitlich veränderlichen physikalischen Messgröße zu bestimmten Messzeitpunkten eingerichtet ist, einer Übertragungswert-Bildungseinheit, welche zu einer Bildung eines Übertragungswertes zu jedem Messwert eingerichtet ist, und Übertragungsmitteln, die zur Übermittlung der gebildeten Übertragungswerte über eine Signalstrecke eingerichtet ist.

Derartige Messeinrichtungen werden beispielsweise bei digitalen Encodern eingesetzt, um eine gemessene Position und/oder Geschwindigkeit an eine entfernt angeordnete Antriebssteuerung zu übertragen und bereitzustellen. Die Übertragungswert-Bildungseinheit wird bei bekannten Messeinrichtungen durch einen Umsetzer des Messwertes für die serielle oder analoge Übertragung gebildet.

Die Erfindung betrifft schließlich eine Messwert-Verarbeitungsvorrichtung mit einer Messeinrichtung, einer Verarbeitungseinheit und einer zwischen der Messeinrichtung und der Verarbeitungseinheit eingerichteten Signalstrecke.

Aus DE 10 2005 041 912 A1 ist ein Verfahren zur Datenübertragung bekannt, bei welchem eine zeitliche Synchronisation von asynchron eintreffenden Daten/Datenwörtern ohne direkte Synchronisation zwischen Sender und Empfänger rekonstruiert wird, wobei ein Taktgenerator des Senders oder Empfängers verstimmt sein kann.

Aus EP 1 098 236 A2 ist eine Übertragungseinrichtung bekannt, bei welcher eine lineare Regression mit einem ersten Messwert und einem letzten Messwert aus einer Messwertreihe durchgeführt wird.

Aus DE 10 2006 008 634 A1 ist ein Mikrocontrollersystem mit Peripherieeinheiten bekannt, bei welchem eine Datensammeleinheit einen als eine Matrix mit einer Mehrzahl von Zeilen und Spalten organisierten Speicherbereich aufweist, wobei jede von Peripherieeinheiten überwachte Betriebsgröße einer Maschine eine Zeile der Matrix zugeordnet ist, in welcher die Messwerte der entsprechenden Betriebsgröße gespeichert werden, wobei eine weitere Zeile vorgesehen ist, um Werte der Zeit zu den jeweiligen Erfassungszeitpunkten zu speichern, und jedem Erfassungszeitpunkt wiederum eine Spalte der Matrix zugeordnet ist, in welche die jeweils auf ein an den Erfassungszeitpunkt ausgesandtes Triggersignal hin zurückgelieferten Messwert der Betriebsgröße eingetragen werden.

Aus DE 10 2011 005 128 A1 ist eine Messeinrichtung mit Kompensation eines verzögerten Ansprechverhaltens bekannt, wobei eine Steigung einer Messkurve einer Vergleichsmessung und eine Steigung einer Messkurve aufgenommen werden und Dynamik-Kompensationsparameter derart bestimmt werden, dass dann, wenn ein Temperaturmessgerät eine bestimmt Steigung der erfassten Temperatur über der Zeit erfasst, eine entsprechend kompensierte, höhere Steigung, durch Anwenden des Kompensationsalgorithmus bestimmbar ist.

Derartige Messwert-Verarbeitungsvorrichtungen werden beispielsweise zur Steuerung eines elektrischen Antriebs eingesetzt, wobei die Messeinrichtung als Encoder oder auf andere Weise zur Messung einer Position und/oder einer Geschwindigkeit des Antriebs eingerichtet ist und die Verarbeitungseinheit in einer Steuerungselektronik einer Antriebsteuerung ausgebildet ist.

Der Erfindung liegt die Aufgabe zugrunde, das Regelverhalten einer Antriebssteuerung zu verbessern.

Zur Lösung dieser Aufgabe schlägt die Erfindung die Merkmale von Anspruch 1 vor. Insbesondere wird somit erfindungsgemäß bei einem Verfahren der eingangs beschriebenen Art zur Lösung der genannten Aufgabe vorgeschlagen, dass der Übertragungswert zu jedem aktuell verarbeiteten Messwert durch zeitliche Extrapolation einer Folge von dem Messwert zeitlich vorangegangen Messwerten auf einen zukünftigen Zeitpunkt gebildet wird. Die Erfindung ermöglicht es daher, der Verarbeitungseinheit einen näherungsweisen, prognostizierten Messwert zur Weiterverarbeitung bereitzustellen, der die Weiterentwicklung des gemessenen Systems bis zum Eintreffen des Übertragungswertes bei der Verarbeitungseinheit berücksichtigt. Zwar ergibt sich durch die Extrapolation ein Fehler, da sich das gemessene System anders als prognostiziert entwickeln könnte. Es hat sich jedoch herausgestellt, dass dieser Fehler für viele Anwendungsfälle klein ist gegen den Fehler, der sich aufgrund der geschilderten Zeitverzögerungen ergäbe. Dies gilt besonders für solche Anwendungsfälle, in welchen das gemessene System überwachte System eine Zeitkonstante für Änderungen der Messgröße (n) hat, die größer ist als die Zeitdauer zur Übertragung eines Messwerts. In diesem Fall hat das gemessene System ein ausreichendes Beharrungsvermögen oder eine ausreichende Trägheit, durch welche die nach der Messung berechnete Prognose zum Zeitpunkt des Eintreffens des Übertragungswertes in der Verarbeitungseinheit noch gültig ist.

Die Messwerte können hierbei als direkte Messwerte, also beispielsweise ohne zwischengeschalteten Rechen- oder Verarbeitungsschritt und/oder direkt aus Rohdaten eines Sensors, oder als abgeleitete Messwerte, beispielsweise mit wenigstens einem zwischengeschalteten Rechenschritt wie einer zeitlichen Ableitung ersten, zweiten oder höheren Grades oder ohne eigenständige Messung, gewonnen und verarbeitet werden.

Die Erfindung ermöglicht es, auf eine hardware-gestützte Synchronisation zwischen der Messeinrichtung und der Verarbeitungseinheit zu verzichten. Die Zeitverzögerung durch die Übertragung und die Berechnung des Übertragungswertes kann durch die erfindungsgemäße Extrapolation kompensiert werden. Somit kann die Leistungsfähigkeit der Antriebssteuerung verbessert werden.

Bei einer vorteilhaften Ausgestaltung kann vorgesehen sein, dass der zukünftige Zeitpunkt von dem Messzeitpunkt des aktuell verarbeiteten Messwerts wenigstens um eine Übertragungszeitspanne für die Übermittlung des Übertragungswertes über die Signalstrecke zeitlich beabstandet ist. Es kann hierbei vorgesehen sein, dass der zukünftige Zeitpunkt zusätzlich um eine Messzeitspanne in die Zukunft versetzt ist. Zusätzlich oder alternativ kann hierbei vorgesehen sein, dass der zukünftige Zeitpunkt zusätzlich um eine Bildungszeitspanne zur Bildung des Übertragungswertes zu einem Messwert in die Zukunft versetzt wird. Somit ist für die Extrapolation zusätzlich berücksichtigbar, dass eine Zeitspanne zwischen einer Aufnahme eines Messwertes und einer Bereitstellung des Übertragungswertes verstreicht. Der Zeitpunkt, zu welchem die Extrapolation berechnet wird, ist somit noch besser an den tatsächlichen Zeitpunkt, zu welchem der Übertragungswert in der Verarbeitungseinheit weiterverarbeitet wird, annäherbar. Zusätzlich oder alternativ kann hierbei vorgesehen sein, dass der zukünftige Zeitpunkt zusätzlich um eine Pufferzeitspanne in die Zukunft versetzt wird. Somit ist beispielsweise eine Taktzittern (jitter) berücksichtigbar. Vor einer Weiterverarbeitung kann somit eine Pufferzeitspanne abgewartet werden, um Übertragungsverzögerungen durch Taktzittern auszugleichen, ohne dass die Extrapolation nennenswert an Gültigkeit einbüßt.

Bei einer vorteilhaften Ausgestaltung kann vorgesehen sein, dass der Übertragungswert als ein digitales Signal übermittelt wird. Von Vorteil ist dabei, dass eine Rechenkapazität in der Messeinrichtung am Messort verwendbar ist. Besonders günstig ist es, wenn der Übertragungswert seriell übermittelt wird. Hierdurch sind einfache und/oder bereits vorhandene Verkabelungen verwendbar.

Bei einer vorteilhaften Ausgestaltung kann vorgesehen sein, dass ein Zeitabstand zwischen den Messzeitpunkten zu zwei aufeinander folgenden Messwerten kleiner als eine Zeitkonstante der zeitlich veränderlichen physikalischen Messgröße ist. Somit sind die Messwerte als aussagekräftige Stützstellen für die Extrapolation verwendbar. Eine Güte der Extrapolation ist somit verbesserbar.

Besonders günstig ist es, wenn eine Zeitspanne bis zu dem zukünftigen Zeitpunkt, für welchen die Extrapolation durchgeführt wird, kleiner ist als eine, beispielsweise die bereits erwähnte, Zeitkonstante der zeitlich veränderlichen physikalischen Messgröße. Von Vorteil ist dabei, dass eine Trägheit oder ein Beharrungsvermögen der Messgröße nutzbar ist, um eine Gültigkeit der Extrapolation zum Zeitpunkt der Weiterverarbeitung zu erreichen.

Bei einer vorteilhaften Ausgestaltung kann vorgesehen sein, dass ein Zeitabstand zwischen zwei Abfragen kleiner als eine, beispielsweise die bereits erwähnte, Zeitkonstante der zeitlich veränderlichen physikalischen Messgröße ist. Von Vorteil ist dabei, dass eine durch die Messgröße beschriebene Bewegung realistisch erfassbar ist.

Bei einer vorteilhaften Ausgestaltung kann vorgesehen sein, dass ein Zeitabstand zwischen den Messzeitpunkten zu zwei aufeinander folgenden Messwerten, beispielsweise der bereits erwähnte Zeitabstand, für die Messwerte konstant ist. Von Vorteil ist dabei, dass ein Gleichungssystem, welches für die Extrapolation gelöst werden muss, vereinfachbar ist, indem die Messzeitpunkte der als Stützstellen verwendeten, vorangegangenen Messwerte als Potenzen des Zeitabstands dargestellt werden.

Bei einer vorteilhaften Ausgestaltung kann vorgesehen sein, dass in der Extrapolation eine Matrixmultiplikation einer Matrix mit Einträgen, die nur von dem zukünftigen Zeitpunkt als Variable abhängen und in welche der zukünftige Zeitpunkt eingesetzt wird, mit der als Vektor angeordneten Anzahl von Messwerten berechnet wird. Von Vorteil ist dabei, dass eine feste Matrix mit Einsetzmöglichkeiten für den zukünftigen Zeitpunkt als Variable hinterlegbar ist. Die Extrapolation ist somit auf rechentechnisch einfache Weise implementierbar. Bevorzugt wird für jede Extrapolation jeweils eine Anzahl von Messwerten verwendet, die untereinander ein für alle Extrapolationen gleichbleibendes Muster von Zeitabständen einhalten, insbesondere die mit einer definierten Abtastrate und/oder jeweils um genau einen Zeitabstand voneinander beabstandet aufgenommen wurden.

Hierdurch ist erreichbar, dass eine Extrapolation als Matrixgleichung behandelbar ist, bei welcher die Matrix nicht von den Messwerten abhängt.

Bei einer vorteilhaften Ausgestaltung kann vorgesehen sein, dass die Bildung des Übertragungswertes jeweils durch eine Abfrage der Verarbeitungseinheit ausgelöst wird. Von Vorteil ist dabei, dass die Verarbeitungseinheit nach Bedarf Übertragungswerte beziehen kann. Eine Synchronisation zwischen der Messeinrichtung und der Verarbeitungseinheit ist verzichtbar. Vorzugsweise wird die Abfrage über die Signalstrecke übermittelt. Somit sind zusätzliche Verbindungsleitungen oder Verbindungskanäle verzichtbar.

Bei einer vorteilhaften Ausgestaltung kann vorgesehen sein, dass eine Abfrage, beispielsweise die bereits erwähnte Abfrage, der Verarbeitungseinheit vor einem Zeitpunkt, zu dem der Übertragungswert in der Verarbeitungseinheit benötigt wird, an die Messeinrichtung gesendet wird. Von Vorteil ist dabei, dass eine Berechnung und Übermittlung des Übertragungswertes zeitgleich zu einer Fortsetzung eines Programms in der Verarbeitungseinheit ausgeführt werden kann. Somit ist vermeidbar, dass die Verarbeitungseinheit auf die Übertragung des Übertragungswertes warten muss. Bevorzugt wird die Abfrage so rechtzeitig versandt, dass bis zum Zeitpunkt, zu dem der Übertragungswert in der Verarbeitungseinheit benötigt wird, eine Übertragung der Abfrage an die Messeinrichtung, eine Prüfung und Auswertung der Abfrage in der Messeinrichtung, eine Bereitstellung des Übertragungswertes in der Messeinrichtung und eine Übermittlung des Übertragungswertes an die Verarbeitungseinheit ausführbar sind. Hierbei kann vorgesehen sein, dass die Bereitstellung des Übertragungswertes einzelne oder alle Rechenschritte der Extrapolation umfasst, oder dass einzelne oder alle Rechenschritte vorab und/oder unabhängig von einer Abfrage wiederkehrend ausgeführt werden, insbesondere um Zeit zu sparen.

Bei einer vorteilhaften Ausgestaltung kann vorgesehen sein, dass die physikalische Messgröße eine Stellposition und/oder eine Stellgeschwindigkeit eines Antriebs ist. Von Vorteil ist dabei, dass das erfindungsgemäße Verfahren in einer Antriebssteuerung einsetzbar ist, insbesondere zu einer Verbesserung einer Regelgüte oder Steifigkeit eines Regelkreises.

Bei einer vorteilhaften Ausgestaltung kann vorgesehen sein, dass der Übertragungswert zur Regelung der physikalischen Messgröße verwendet wird. Somit ist eine Genauigkeit einer Rückkopplung der Regelung verbesserbar, indem der rückgekoppelte Übertragungswert zum Zeitpunkt seiner Weiterverarbeitung besser mit dem zu diesem Zeitpunkt tatsächlich vorliegenden Messwert übereinstimmt.

Bei einer vorteilhaften Ausgestaltung kann vorgesehen sein, dass zur Bildung des Übertragungswertes eine Extrapolation mit einem vorzugsweise kubischen oder quadratischen Polynom in einer Zeitvariablen berechnet wird. Somit ist eine Näherung für die Extrapolation verwendbar, nach welcher ein Ruck (*jerk*) in einem betrachteten Zeitfenster Null ist. Dies gilt für viele Prozesse mit hinreichender Genauigkeit bei genügend kleinem Zeitfenster. Die Beschränkung auf quadratische Polynome in der Zeitvariablen ist für Prozesse möglich, bei denen eine Beschleunigung in einem betrachteten Zeitfenster vernachlässigbar ist. Dies kann bei großen bewegten Trägheitsmomenten oder Massen gegeben sein. Die Beschränkung der Ordnung des Polynoms hat den Vorteil, dass ein Rechenaufwand für eine automatisierte, computerimplementierte Berechnung des Übertragungswertes reduzierbar ist.

Bei einer vorteilhaften Ausgestaltung kann vorgesehen sein, dass zu jedem Messwert Koeffizienten eines Polynoms, welches eine erste Anzahl von Messwerten beschreibt, berechnet werden. Von Vorteil ist dabei, dass die Koeffizienten als Parameter für eine Extrapolation bereitstehen. Besonders günstig ist es, wenn die Koeffizienten vor oder unabhängig von einer Abfrage durch die Verarbeitungseinheit berechnet werden. Somit ist eine Zeitdauer, bis zu der ein Übertragungswert auf eine Abfrage bereitstellbar ist, verkürzbar.

Bei einer vorteilhaften Ausgestaltung kann vorgesehen sein, dass die Koeffizienten, welche das Polynom zur Beschreibung der ersten Anzahl von Messwerten definieren, durch eine Matrixmultiplikation mit den Messwerten berechnet werden. Von Vorteil ist dabei, dass ein einfach implementierbares Verfahren angegeben ist.

Bei einer vorteilhaften Ausgestaltung kann vorgesehen sein, dass die Messwerte mit einer Matrix multipliziert werden, die nur von einer Ordnung des Polynoms und der ersten Anzahl von Messwerten abhängt. Von Vorteil ist dabei, dass eine explizite Zeitabhängigkeit eliminierbar ist. Hierbei ist es günstig, wenn die Messwerte der Anzahl von Messwerten zu aufeinanderfolgenden Zeitpunkten gemessen werden, die jeweils durch den Zeitabstand voneinander beabstandet sind. Bevorzugt wird für jede Extrapolation jeweils eine Anzahl von Messwerten verwendet, die untereinander ein für alle Extrapolationen gleichbleibendes Muster von Zeitabständen einhalten, insbesondere die jeweils um genau einen Zeitabstand voneinander beabstandet aufgenommen wurden. Von Vorteil ist dabei, dass eine explizite Zeitabhängigkeit durch eine Skalierung, also eine Division der Zeit durch den Zeitabstand eliminierbar ist.

Bei einer vorteilhaften Ausgestaltung kann vorgesehen sein, dass die Matrix durch eine Pseudo-Invertierung einer Rechteckmatrix mit Einträgen von zeilenweise ansteigenden Potenzen einer jeweiligen Zeilennummer gebildet ist. Eine Pseudo-Invertierung kann für eine Rechteckmatrix beispielsweise dadurch charakterisiert werden, dass die Inverse eines Matrixproduktes der transponierten Matrix mit der transponierten Matrix gebildet und mit der transponierten Matrix matrixmultipliziert wird. Von Vorteil ist dabei, dass eine Matrixgleichung auch dann einfach invertierbar ist, wenn eine nicht-quadratische Rechteckmatrix involviert ist.

Bei einer vorteilhaften Ausgestaltung kann vorgesehen sein, dass die Anzahl der Messwerte größer als 2 ist. Von Vorteil ist dabei, dass das aufzulösende Gleichungssystem nicht unterbestimmt ist und somit eine Pseudo-Invertierung ausführbar ist.

Bei einer vorteilhaften Ausgestaltung kann vorgesehen sein, dass die Matrix für alle Berechnungen mit festen Einträgen hinterlegt ist. Von Vorteil ist dabei, dass eine Matrixinvertierung für die Berechnung der Koeffizienten nicht erforderlich ist. Hierdurch ist Rechenkapazität einsparbar, so dass das Verfahren auf einer Verarbeitungseinheit mit äußerst begrenzter Rechenkapazität ausführbar ist.

Bei einer vorteilhaften Ausgestaltung kann vorgesehen sein, dass zu den Messwerten abgeleitete Messwerte einer physikalischen Messgröße, die als eine Funktion, insbesondere als eine zeitliche Ableitung erster, zweiter oder höherer Ordnung, der physikalischen Messgröße der zuerst genannten Messwerte beschreibbar ist, berechnet werden, indem ein an die zuerst genannten Messwerte angepasstes Polynom, beispielsweise das bereits erwähnte Polynom, verarbeitet und/oder ausgewertet wird. Beispielsweise können diese zuerst genannten Messwerte als direkte Messwerte vorliegen. Von Vorteil ist dabei, dass eine aufwändige Berechnung von zeitlichen Ableitungen beispielsweise mit einer Phasenregelschleife (PLL - phase locked loop) und/oder einem Differenzierglied verzichtbar ist. Bevorzugt erfolgt die Verarbeitung des Polynoms durch Verarbeitung von Koeffizienten, beispielsweise den bereits erwähnten Koeffizienten, des Polynoms. Somit nutzt die Erfindung aus, dass sich die zeitlichen Ableitungen eines zeitabhängigen Polynoms - das hier die zeitliche Abfolge der (direkten, zuerst genannten) Messwerte beschreibt - allein aus den Koeffizienten ohne Differentiation beschreiben lassen.

Bei einer vorteilhaften Ausgestaltung kann vorgesehen sein, dass nach Erhalt einer Abfrage der Übertragungswert durch eine Extrapolation mit den Koeffizienten zu dem aktuell verarbeiteten Messwert gebildet wird. Diese Koeffizienten können hierbei für jeden neu aufgenommenen Messwert unabhängig von einer Abfrage aktualisiert werden. Es sind somit gleitende Koeffizienten für die Extrapolation bereithaltbar. Somit ist ein einfacher Berechnungsweg zu einer schnellen Berechnung des Übertragungswertes in Reaktion auf eine Abfrage nutzbar.

Bei einer vorteilhaften Ausgestaltung kann vorgesehen sein, dass in der Extrapolation durch eine Matrixmultiplikation jeweils ein Übertragungswert und wenigstens eine zugehörige zeitliche Ableitung, insbesondere eine Position, eine Geschwindigkeit und/oder eine Beschleunigung, berechnet werden. Von Vorteil ist dabei, dass zusätzlich zu einer Positionsinformation auch Geschwindigkeitsinformationen und/oder Beschleunigungsinformationen ohne eine Differentiation bereitstellbar sind. Aufwendige Phasenrückkopplungsschleifen zur Differentiation eines übermittelten zeitabhängigen Positionssignals sind somit verzichtbar.

Bei einer vorteilhaften Ausgestaltung kann vorgesehen sein, dass die Extrapolation durch eine Matrixmultiplikation der Koeffizienten mit einer Extrapolationsmatrix mit Einträgen, die nur von dem zukünftigen Zeitpunkt, der Abtastperiode und der Anzahl von Messwerten abhängen und in welche der zukünftige Zeitpunkt eingesetzt wird, gebildet wird. Die Abtastperiode kann hierbei den Zeitabstand zwischen den Messzeitpunkten zu aufeinanderfolgenden Messwerten vorgeben. Von Vorteil ist dabei, dass eine Matrixmultiplikation mit einfachen rechentechnischen Mitteln implementierbar ist. Von Vorteil ist weiter, dass bei einer Matrixmultiplikation mehrere Komponenten, beispielsweise Position, Geschwindigkeit und/oder Beschleunigung, simultan berechenbar sind und berechnet werden.

Bei einer vorteilhaften Ausgestaltung kann vorgesehen sein, dass in der Extrapolation zunächst eine Position und eine Geschwindigkeit und insbesondere zusätzlich eine Beschleunigung berechnet werden. Von Vorteil ist dabei, dass die Extrapolation als Matrixmanipulation implementierbar ist. Dies ist rechentechnisch günstig für eine Implementierung in einer Verarbeitungseinheit mit begrenzter Rechenkapazität.

Bei einer vorteilhaften Ausgestaltung kann vorgesehen sein, dass zur Bildung des Übertragungswertes versuchsweise ein erster Übertragungswert durch Extrapolation von einer ersten Anzahl von vorangegangenen Messwerten, beispielsweise der bereits erwähnten Anzahl, und ein zweiter Übertragungswert durch Extrapolation von einer zweiten Anzahl, wobei die zweite Anzahl kleiner als die erste Anzahl ist, von vorangegangenen Messwerten gebildet wird und dass als Übertragungswert der erste Übertragungswert genommen wird, wenn eine Abweichung zwischen dem ersten Übertragungswert und dem zweiten Übertragungswert kleiner als ein Schwellwert ist, und dass andernfalls der zweite Übertragungswert als Übertragungswert genommen wird.

Zur Lösung der genannten Aufgabe sind erfindungsgemäß die Merkmale des auf eine Messeinrichtung gerichteten nebengeordneten Anspruchs vorgesehen. Insbesondere wird zur Lösung der genannten Aufgabe somit erfindungsgemäß bei einer Messeinrichtung der eingangs beschriebenen Art vorgeschlagen, dass die Übertragungswert-Bildungseinheit zu einer Bildung des Übertragungswerts zu jedem aktuell verarbeiteten Messwert als zeitliche Extrapolation einer Folge von dem Messwert zeitlich vorangegangen Messwerten auf einen zukünftigen Zeitpunkt eingerichtet ist. Die Erfindung macht sich zunutze, dass die Rechenleistung von Digitalprozessoren heutzutage immer stärker zunimmt, während der Beschaffungspreis gleichzeitig sinkt. Somit kann eine Messeinrichtung zur Umsetzung der Erfindung mit ausreichender Rechenleistung ausgerüstet sein. Die Erfindung bietet den Vorteil, dass an eine übergeordnete Steuerung oder sonstige Verarbeitungseinheit Übertragungswerte übertragbar sind, welche besser an den tatsächlichen Messwert der Messgröße zum Zeitpunkt einer Weiterverarbeitung in der Verarbeitungseinheit angenähert sind. Somit ist die Aussagekraft einer erfassten und übermittelten Messgröße verbesserbar. Die Erfindung bietet den weiteren Vorteil, dass eine Extrapolation in der Messeinrichtung berechenbar ist. Somit ist die Verarbeitungseinheit von Rechenaufgaben entlastbar. Schließlich sind so auch nicht übermittelte Messwerte zu vorangegangenen Messungen als Stützstellen für die Extrapolation verwendbar, die an der übergeordneten Verarbeitungseinheit nicht zur Verfügung stünden. Mit der erfindungsgemäßen Messeinrichtung ist somit eine Messeinrichtung geschaffen, die einfach auch in bestehenden Systemen einsetzbar ist. Es lässt sich so erreichen, dass für eine Nachrüstung nur eine Programmierung der Verarbeitungseinheit angepasst werden muss.

Bei einer Ausgestaltung der Erfindung kann vorgesehen sein, dass Mittel zur Ausführung eines erfindungsgemäßen Verfahrens, insbesondere wie zuvor beschrieben und/oder nach einem der auf ein Verfahren gerichteten Ansprüche, ausgebildet sind. Somit sind mit der erfindungsgemäßen Messeinrichtung die beschriebenen Vorzüge und Weiterbildungen des erfindungsgemäßen Verfahrens nutzbar.

Zur Lösung der genannten Aufgabe sind erfindungsgemäß die Merkmale des auf eine Messwert-Verarbeitungsvorrichtung gerichteten, nebengeordneten Anspruchs vorgesehen. Insbesondere wird zur Lösung der genannten Aufgabe somit erfindungsgemäß bei einer Messwert-Verarbeitungsvorrichtung der eingangs beschriebenen Art vorgeschlagen, dass die Messeinrichtung erfindungsgemäß, insbesondere wie zuvor beschrieben und/oder nach einem der auf eine Messeinrichtung gerichteten Ansprüche, und/oder zur Ausführung eines erfindungsgemäßen Verfahrens, insbesondere wie zuvor beschrieben und/oder nach einem der auf ein Verfahren gerichteten Ansprüche, eingerichtet ist. Von Vorteil ist dabei, dass eine Signalverarbeitungskette bildbar ist, bei welcher spätere Verarbeitungsschritte in der Verarbeitungseinheit - innerhalb der Grenzen der Näherung durch die Extrapolation - auf zeitlich nicht oder nur gering verzögerte Messwerte (genauer deren Näherungen) zugreifen können. Somit ist eine Genauigkeit dieser späteren Verarbeitungsschritte verbesserbar.

Bei einer Ausgestaltung der Erfindung kann vorgesehen sein, dass die Signalstrecke Teil einer Regelschleife ist. Von Vorteil ist dabei, dass eine verzögerungsfreie oder zumindest verzögerungsarme Rückkopplung bereitstellbar ist. Von Vorteil ist weiter, dass diese vorteilhafte Rückkopplung auch bei bestehenden Systemen nachrüstbar ist. Dies kann beispielsweise dadurch erreicht werden, dass eine vorhandene Messeinrichtung gegen eine erfindungsgemäße Messeinrichtung ausgetauscht und eine Programmierung oder sonstige Einrichtung der Verarbeitungseinheit angepasst wird.

Bei einer Ausgestaltung der Erfindung kann vorgesehen sein, dass die Messeinrichtung ein Encoder ist. Von Vorteil ist dabei, dass die Erfindung zur Verbesserung einer Positions- und/oder Geschwindigkeitsmessung insbesondere in der Antriebstechnik, also beispielsweise bei Antrieben, einsetzbar ist.

Zusätzlich oder alternativ kann bei einer Ausgestaltung der Erfindung vorgesehen sein, dass die Verarbeitungseinheit Teil einer Antriebsregeleinheit ist. von Vorteil ist dabei, dass eine Präzision, Güte und/oder Steifigkeit einer Regelung, die von der Antriebsregeleinheit ausgeführt wird, verbesserbar ist.

Die Erfindung wird nun anhand eines Ausführungsbeispiels näher beschrieben, ist jedoch nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt

Fig. 1    eine Signalverarbeitung in einer Verarbeitungseinheit und in einer Messeinrichtung einer erfindungsgemäßen Messwert-Verarbeitungsvorrichtung,

Fig. 2    ein Ablaufschema eines erfindungsgemäßen Verfahrens,

Fig. 3    die Berechnung der Extrapolation bei einem erfindungsgemäßen Verfahren,

Fig. 4    Verlaufskurve physikalischer Messgrößen bei einem erfindungsgemäßen Verfahren,

Fig. 5    eine alternative Berechnungsform der Extrapolation bei einem erfindungsgemäßen Verfahren,

Fig. 6    eine erfindungsgemäße Messwert-Verarbeitungsvorrichtung und

Fig. 7    eine Einzelheit einer Messeinrichtung aus Fig. 6.

Die Erfindung wird nun anhand eines Anwendungsfalls beschrieben, bei welchem die Messeinrichtung 26 ein Encoder zur Messung der Position und der Geschwindigkeit eines von einem Antrieb angetriebenen Teils ist und bei welchem der Antrieb eine Antriebssteuerung hat, welche die Verarbeitungseinheit 24 bereitstellt. Auch wenn dies als ein häufiger Anwendungsfall die bevorzugte Anwendung der Erfindung darstellt, ist die Erfindung auch in anderen Konstellationen und technischen Gebieten einsetzbar.

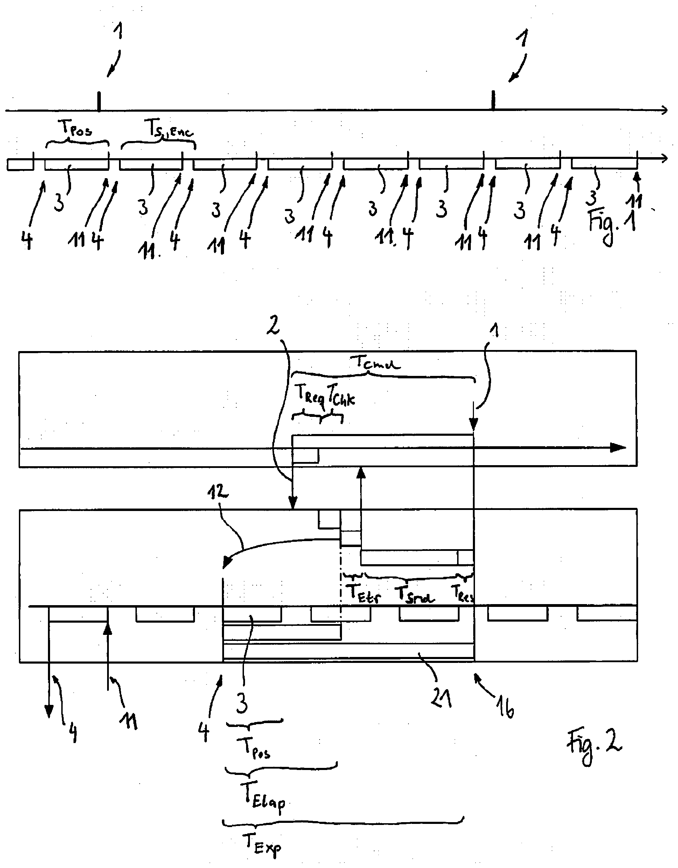

Die Figuren 1 bis 6 werden im Folgenden gemeinsam beschrieben.

Eine Messwert-Verarbeitungsvorrichtung 33 hat eine Messeinrichtung 26 mit einem Messsensor 34, hier einem Encoder, eine Verarbeitungseinheit 24 und eine zwischen der Messeinrichtung 26 und der Verarbeitungseinheit 24 eingerichtete Signalstrecke 29.

In der Verarbeitungseinheit 24 läuft ein Programm ab, welches eine Regelschleife 32 bildet, bei welcher die physikalische Größe eine Eingangsgröße darstellt. Im vorliegenden Beispiel ist dies eine Positionsregelung und/oder eine Geschwindigkeitsregelung in Abhängigkeit einer Ist-Position und/oder einer Ist-Geschwindigkeit als physikalische Messgröße(n).

Die Werte der physikalischen Messgröße werden über eine Signalstrecke 29, hier ein Anschlusskabel oder eine Funkstrecke des Encoders, an die Verarbeitungseinheit 24 übermittelt.

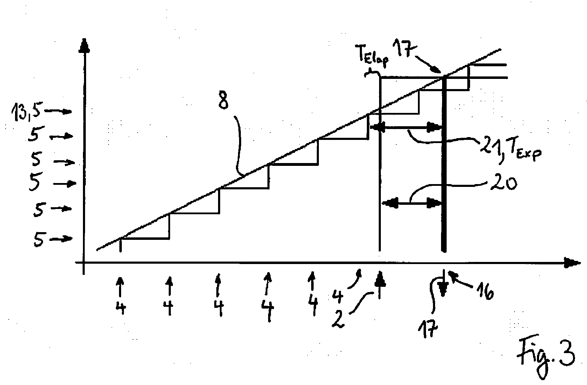

Fig. 1 zeigt in der oberen Bildhälfte auf einem Zeitstrahl Verarbeitungszeitpunkte 1, zu denen ein neuer Wert für die physikalische Messgröße in der Verarbeitungseinheit benötigt wird. Für diese Verarbeitungszeitpunkte 1 sendet die Verarbeitungseinheit jeweils eine Abfrage 2 (vgl. Fig. 2 und 3) an die Messeinrichtung.

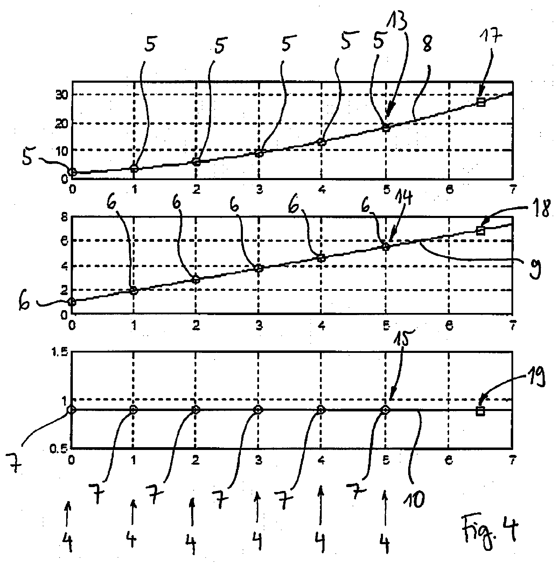

In der unteren Bildhälfte von Fig. 1 sind auf einem weiteren Zeitstrahl Berechnungsabschnitte 3 dargestellt. Am Anfang dieser Berechnungsabschnitte 3 sind jeweils Messzeitpunkte 4 vorgesehen, zu denen die Messeinrichtung einen momentanen direkten Messwert 5 der physikalischen Größe 8 misst, vgl. Fig. 4. In den Berechnungsabschnitten 3 werden Rohsignale eines Messsensors 34 in abgeleitete Messwerte 6, 7 umgesetzt. Im Ausführungsbeispiel werden zu den direkten Messwerten 5 der Position auch die abgeleiteten Messwerte 6 der Geschwindigkeit und 7 der Beschleunigung berechnet. Am Ende der Berechnungsabschnitte 3 liegen jeweils zu einem Bereitstellungszeitpunkt 11 die aktuellen Messwerte 13, 14, 15 in der Messeinrichtung vor. Jeder Berechnungsabschnitt 3 dauert eine Messzeitspanne $T_{Pos}$. Nach einer Abtastperiode $T_{S,\,Enc}$ wird jeweils ein neuer Messwert 5, 6, 7 aufgenommen.

Im Ausführungsbeispiel sind die Messwerte 5 direkte Messwerte in dem Sinne, dass die Messwerte 5 direkt aus Rohdaten eines Messsensors gebildet sind. Die Messwerte 6, 7 sind dagegen abgeleitete Messwerte in dem Sinne, dass keine eigenständigen Messungen durchgeführt werden, sondern die Messwerte 6, 7 aus den zuerst genannten Messwerten 5 berechnet oder gebildet werden. Dies ist dadurch möglich, dass die physikalischen Messgrößen 9, 10 zu den Messwerten 6, 7 als jeweils als Funktion der physikalischen Messgröße 8 der Messwerte 5 beschreibbar sind. Bei weiteren Ausführungsbeispielen können einzelne oder alle Messwerte 5, 6, 7 als direkte oder als abgeleitete Messwerte gewonnen sein.

Fig. 4 zeigt beispielhaft einen zeitlichen Verlauf einer physikalischen Messgröße 8 als Position, einen zugehörigen zeitlichen Verlauf einer physikalischen Messgröße 9 als Geschwindigkeit, also einen zeitlichen Verlauf der ersten Ableitung der physikalischen Messgröße 8, und einen zugehörigen zeitlichen Verlauf einer physikalischen Messgröße 10 als Beschleunigung, also einen zeitlichen Verlauf der zweiten Ableitung der physikalischen Messgröße 8. Die dargestellten Bewegungsverläufe sind nur beispielhaft und nicht limitierend. Die Bewegungsabläufe können tatsächlich im Rahmen der physikalischen Gesetzmäßigkeiten beliebig sein.

Eine Zeitspanne $T_{Req}$ ist erforderlich, um die Abfrage 2 an die Messeinrichtung zu übertragen.

Eine Zeitspanne $T_{Chk}$ ist in der Messeinrichtung erforderlich, um diese Abfrage 2 zu verarbeiten.

Die Messeinrichtung 26 verwendet in Reaktion auf die Abfrage 2 den aktuell verarbeiteten Messwert 13, 14, 15, d.h. den letzten Messwert 5, 6, 7 vor Eingang der Abfrage 2, für welchen der Berechnungsabschnitt 3 abgeschlossen ist. Der zugehörige Messzeitpunkt 4 zu diesem Messwert 13, 14, 15 ist in Fig. 2 durch einen Pfeil 12 bezeichnet.

Die Messeinrichtung 26 berechnet aus der Folge der Messwerte 5, 6, 7 zu dem aktuellen Messwert 13, 14, 15 für einen zukünftigen Zeitpunkt 16 jeweils einen Übertragungswert 17, 18, 19.

Dies geschieht durch Extrapolation gemäß Fig. 3.

Dargestellt ist ein zeitlicher Verlauf der physikalischen Messgröße 8. Es sei angenommen, dass dieser Verlauf durch ein Polynom beschreibbar ist. Für die weiteren physikalischen Messgrößen 9, 10 läuft das Verfahren analog zu dem hier beschriebenen Verfahren ab.

Die Messeinrichtung 26 misst zu den Messzeitpunkten 4 jeweils einen direkten Messwert 5 der physikalischen Messgröße 8 und beginnt nach jeder Messung eine Zeitdauer zu messen, die seit dem letzten Messzeitpunkt 4 verstrichen ist.

In der Messeinrichtung 26 ist eine Extrapolationszeitdauer 20 hinterlegt, welche eine Zeitdauer beschreibt, die zu einer Berechnung der Extrapolation und zur Übermittlung der berechneten Übertragungswerte 17, 18, 19 an die Verarbeitungseinheit 24 benötigt wird.

Aus dem Zeitpunkt des Eingangs der Abfrage 2 und der Extrapolationszeitdauer 20 ermittelt die Messeinrichtung 26 einen zukünftigen Zeitpunkt 16, für welchen der Übertragungswert 17 berechnet wird.

Die Messeinrichtung 26 passt nun ein Polynom festgelegter Ordnung an die als Stützstellen dienenden Messwerte 5 an und berechnet den Übertragungswert 17, der zum zukünftigen Zeitpunkt 16 auf der Kurve des Polynoms liegt. Hierbei verwendet die Messeinrichtung 26 einen Extrapolationsschritt (21, $T_{Exp}$), der sich aus einer seit dem letzten Messzeitpunkt 4 verstrichenen Zeitdauer ($T_{Elap}$) und der Extrapolationszeitdauer 20 zusammensetzt. Dieser Übertragungswert 17 wird vor oder an dem zukünftigen Zeitpunkt 16 an die Verarbeitungseinheit 24 übertragen.

Fig. 2 zeigt den zeitlichen Ablauf detaillierter. Hier bezeichnet wieder $T_{Elap}$ die Zeitdauer, die seit dem letzten Messzeitpunkt 4 bis zum vollständigen Eingang der Abfrage 2 in der Messeinrichtung 26 verstrichen ist, und $T_{Exp}$ bezeichnet wieder den Extrapolationsschritt 21.

Die Abfrage 2 der Verarbeitungseinheit 24 wird hierbei eine Anforderungszeitspanne $T_{Cmd}$ vor dem zukünftigen Zeitpunkt 16, zu dem der Übertragungswert 17, 18, 19 in der Verarbeitungseinheit 24 benötigt wird, an die Messeinrichtung 26 gesendet. Es gilt

$$T_{Cmd} = T_{Req} + T_{Chk} + T_{Etr} + T_{Snd} + T_{Res}. \qquad (1)$$

Es ist ersichtlich, dass sich der Extrapolationsschritt $T_{Exp}$ aus der Zeitdauer $T_{Elap}$, der Bildungszeitspanne $T_{Etr}$ zur Bildung der Übertragungswerte 17, 18, 19, der Übertragungszeitspanne $T_{Snd}$ und einer Pufferzeitspanne $T_{Res}$ zum Ausgleich von Taktzittern zusammensetzt.

Es gilt

$$\begin{aligned} T_{Exp} &= T_{Elap} + T_{Etr} + T_{Snd} + T_{Res} \\ &= T_{Elap} + T_{Cmd} - T_{Req} - T_{Chk}. \end{aligned} \qquad (2)$$

Im Folgenden wird die Berechnung der Übertragungswerte 17, 18, 19 in der Übertragungswert-Bildungseinheit 30 der Messeinrichtung anhand eines Beispiels genauer erläutert. Die Erfindung ist jedoch nicht auf dieses Berechnungsverfahren beschränkt, sondern es sind auch andere Rechenwege implementierbar.

Innerhalb eines kurzen Zeitintervalls von beispielsweise einigen hundert Mikrosekunden $t \in [0, T]$ kann jede beliebige Bewegung durch eine konstante Beschleunigung angenähert werden:

$$\begin{aligned} \alpha &= \text{const} \\ v &= v_0 + \int_0^t \alpha\, dt = v_0 + \alpha t \\ x &= \int_0^t v\, dt = x_0 + v_0 t + \frac{1}{2} \alpha t^2 \end{aligned} \qquad (3)$$

Hier ist $\alpha$ die Beschleunigung, $v$ die Geschwindigkeit und $x$ die Position; $v_0$-$x_0$ bezeichnen die Anfangsgeschwindigkeit und die Anfangsposition. Man sieht, dass die Position ein Polynom zweiten Grades in der Zeit t ist. Eine Bewegung mit konstanter Geschwindigkeit ist somit nur ein Spezialfall, bei welchem die Beschleunigung Null ist. Die Betrachtung kann auf beliebige Bewegungen mit konstantem Ruck (Ableitung der Beschleunigung) ausgedehnt werden. In diesem Fall erhält man ein Polynom dritten Grades. Auch Polynome höheren Grades können verwendet werden, kommen aber in der Praxis selten vor. Vielmehr ist das Polynom niederen Grades eine ausreichende Näherung der Realität, wenn das betrachtete Zeitintervall genügend kurz ist.

Im Folgenden betrachten wir der Einfachheit halber ein Polynom zweiten Grades in der folgenden Form

$$x = c_0 + c_1 t + c_2 t^2 \qquad (4)$$

Die Situation für ein Polynom höherer Ordnung ergibt sich anhand der folgenden Überlegungen sofort analog.

Die Beschleunigung ist hierbei in Gleichung (4) als konstant angenommen, was näherungsweise für sehr kurze Zeitintervalle gilt. Das Verfahren ist aber nicht auf Polynome zweiten Grades beschränkt.

Die zugehörige Geschwindigkeit und Beschleunigung wird beschrieben durch

$$\begin{aligned} v &= c_1 + 2c_2 t \\ \alpha &= 2c_2 \end{aligned} \qquad (5)$$

Es gibt somit drei unbekannte Parameter $c_0$, $c_1$, $c_2$. Für ein abgetastetes System mit einer definierten Abtastrate, also bei welchem der Messwert 5 in der Folge jeweils um genau einen Zeitabstand voneinander beabstandet aufgenommen wurden, kann die Zeitvariable mit der Abtastperiode skaliert werden, um die Berechnung zu vereinfachen. Wenn die Abtastperiode mit $T$ bezeichnet wird, gilt

$$t = kT \tag{6}$$

Wenn $k$ eine ganze Zahl ist, ist die Zeit $t$ genau eine Abtastzeit (Messzeitpunkt 4). Andernfalls liegt die Zeit $t$ zwischen zwei Abtastzeiten.

Durch die Skalierung kann das Polynom gemäß Gleichung (4) umgeschrieben werden als

$$x = c_0 + c_1 kT + c_2 (kT)^2 = c_0 + (c_1 T)k + (c_2 T^2)k^2 \tag{7}$$

Mit den Ersetzungen

$$\begin{aligned} a_0 &= c_0 \\ a_1 &= c_1 T \\ a_2 &= c_2 T^2 \end{aligned} \tag{8}$$

ergibt sich

$$x = a_0 + a_1 k + a_2 k^2 \tag{9}$$

Mit drei Messwerten 5, nämlich $x_0$, $x_1$, $x_2$, zu skalierten Zeiten $k=0, 1, 2$ gilt

$$\begin{aligned} x_0 &= a_0 \\ x_1 &= a_0 + a_1 + a_2 \\ x_2 &= a_0 + 2a_1 + 4a_2 \end{aligned} \tag{10}$$

Die Lösung kann in diesem Fall eindeutig bestimmt werden durch

$$\begin{aligned} a_0 &= x_0 \\ a_1 &= \frac{4x_1 - x_2 - 3x_0}{2} \\ a_2 &= \frac{x_2 - 2x_1 + x_0}{2} \end{aligned} \tag{11}$$

In realen Anwendungen gibt es jedoch immer Rauschen, wodurch die Genauigkeit der Berechnung beeinträchtigt wird. Um diesen Einfluss des Rauschens zu reduzieren, kann eine Anzahl 22 von mehr als drei Messwerten verwendet werden. Es wird somit eine Annäherung des Polynoms gemäß Gleichung (4) an die Anzahl n von Messwerten berechnet. In diesem Fall ergibt sich für die skalierte Zeit $k = 0,1,2...,n$

$$\underbrace{\begin{bmatrix} x_0 \\ x_1 \\ \vdots \\ x_n \end{bmatrix}}_{x} = \underbrace{\begin{bmatrix} 1 & 0 & 0 \\ 1 & 1 & 1 \\ \vdots & \vdots & \vdots \\ 1 & n & n^2 \end{bmatrix}}_{A} \underbrace{\begin{bmatrix} a_0 \\ a_1 \\ a_2 \end{bmatrix}}_{\theta} \tag{12}$$

Die Matrix A ist hierbei eine Rechteckmatrix mit Einträgen von zeilenweise ansteigenden Potenzen einer jeweiligen Zeilennummer, wobei der erste Eintrag links oben als $0^0=1$ geschrieben werden kann.

Diese Gleichung (12) kann umgeschrieben werden als

$$x = A\,\theta \qquad\qquad (13)$$

Der Vektor $\theta$ enthält hierbei die Parameter, welche die Koeffizienten des Polynoms aus Gleichung (7) definieren.

Für $n \geq 3$ können die Parameter durch Pseudo-Invertierung berechnet werden gemäß

$$\theta = (A^T A)^{-1}(A^T x) = B(A^T x) \qquad\qquad (14)$$

Die Parameter in $\theta$ werden somit durch eine Matrixmultiplikation mit den Messwerten des Vektors x berechnet.

Durch die Verwendung der skalierten Zeit ist die Matrixinvertierung vereinfacht. Es gilt

$$B = (A^T A)^{-1} = \begin{bmatrix} \sum_{i=0}^{n} 1 & \sum_{i=0}^{n} i & \sum_{i=0}^{n} i^2 \\ \sum_{i=0}^{n} i & \sum_{i=0}^{n} i^2 & \sum_{i=0}^{n} i^3 \\ \sum_{i=0}^{n} i^2 & \sum_{i=0}^{n} i^3 & \sum_{i=0}^{n} i^4 \end{bmatrix}^{-1} \qquad\qquad (15)$$

und

$$A^T x = \begin{bmatrix} \sum_{i=0}^{n} x_i \\ \sum_{i=0}^{n} i\, x_i \\ \sum_{i=0}^{n} i^2 x_i \end{bmatrix} \qquad\qquad (16)$$

Man sieht, das die Matrix B und die Matrix $A^T$ nur von der Ordnung des Polynoms in Gleichung (7) und der ersten Anzahl n von Messwerten $x_0$, $x_1$, $x_2$, ..., $x_n$ abhängen.

Zu gegebenem $n$ ist die Matrix **B** eine konstante Matrix. Diese Matrix wird für alle Berechnungen in der Verarbeitungseinheit mit festen Einträgen hinterlegt.

Wählt man zum Beispiel $n = 5$ (sechs Messwerte 5 werden verwendet), so ergibt sich

$$B_6 = \left\{ \begin{bmatrix} 1 & 0 & 0 \\ 1 & 1 & 1 \\ \vdots & \vdots & \vdots \\ 1 & 5 & 5^2 \end{bmatrix}^T \begin{bmatrix} 1 & 0 & 0 \\ 1 & 1 & 1 \\ \vdots & \vdots & \vdots \\ 1 & 5 & 5^2 \end{bmatrix} \right\}^{-1} = \begin{bmatrix} 6 & 15 & 55 \\ 15 & 55 & 255 \\ 55 & 255 & 979 \end{bmatrix}^{-1} = \begin{bmatrix} \dfrac{23}{28} & -\dfrac{33}{56} & \dfrac{5}{56} \\ -\dfrac{33}{56} & \dfrac{407}{560} & -\dfrac{15}{112} \\ \dfrac{5}{56} & -\dfrac{15}{112} & \dfrac{3}{112} \end{bmatrix} \qquad (17)$$

Mit den bestimmten Parametern können die Position, die skalierte Geschwindigkeit und die skalierte Beschleunigung leicht zu jeder gewünschten Zeit durch Interpolation und Extrapolation der aktuellen Messwerte in $\theta$ berechnet werden:

$$x(k) = \begin{bmatrix} 1 & k & k^2 \end{bmatrix} \theta$$

$$v(k) = \begin{bmatrix} 0 & \dfrac{1}{T} & \dfrac{2k}{T^2} \end{bmatrix} \theta \qquad (18)$$

$$a(k) = \begin{bmatrix} 0 & 0 & \dfrac{2}{T^2} \end{bmatrix} \theta$$

Die Einträge der Extrapolationsmatrix hängen somit nur von dem zukünftigen Zeitpunkt 16, der Abtastperiode T und den n+1 gemessenen Positionen $x_i$, also der Anzahl n von Messwerten 5, ab. Durch Vergleich mit den Gleichungen (4), (8) und (12) ergibt sich, dass auf der linken Seite von Gleichung (18) von oben nach unten die Position x, die Geschwindigkeit und die Beschleunigung a stehen. Setzt man die Gleichungen (14) und (18) zusammen, so ergibt sich, dass bei dem erfindungsgemäßen Verfahren zur Extrapolation eine Matrixmultiplikation einer Matrix mit Einträgen, die nur von dem zukünftigen Zeitpunkt 16 als Variable abhängen und in welche der zukünftige Zeitpunkt 16 eingesetzt wird, mit der als Vektor angeordneten Anzahl von Messwerten 5, 6, 7 berechnet wird.

Mit Gleichung (2) können die Position und Geschwindigkeit auf den zukünftigen Zeitpunkt 16 extrapoliert werden. Es gilt für die skalierte Zeit (mit der Abtastperiode T)

$$k = \frac{T_{Exp1}}{T} \qquad (19)$$

Dies ist in der Regel keine ganze Zahl, sondern es gilt

$$T_{Exp1} = T_{Exp} + n\,T \qquad (20)$$

Somit ist

$$k = \frac{T_{Exp}}{T} + n \qquad (21)$$

Es ergeben sich somit die Übertragungswerte 17, 18, 19, die von der Messeinheit innerhalb der Übertragungszeitdauer $T_{Snd}$ an die Verarbeitungseinheit 24 gesendet werden, durch eine Matrixmultiplikation mit der Matrix gemäß Gleichung (18). Es werden somit ein Übertragungswert 17, die zugehörige erste zeitliche Ableitung als Übertragungswert 18 und die zugehörige zweite zeitliche Ableitung als Übertragungswert 19 in einer Berechnung ermittelt. Nach einer Pufferzeitdauer $T_{Res}$ stehen die Übertragungswerte 17, 18, 19 zur Weiterverarbeitung bereit.

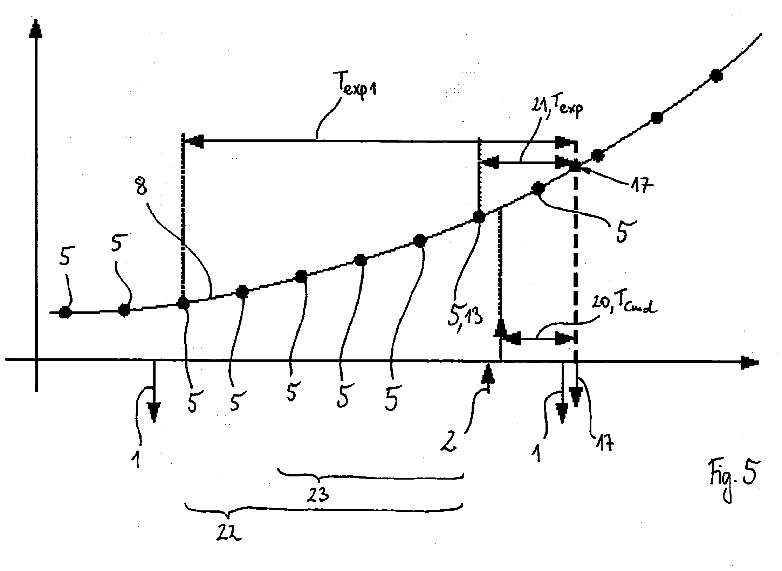

Die Messeinrichtung 26, hier der Encoder, berechnet somit die Absolutposition mit einer hohen Abtastrate. Wenn die Messeinrichtung 26 eine Abfrage 2 erhält, die Absolutposition und die Geschwindigkeit zu senden, verwendete sie die letzten n+1 Messwerte, um die Polynomkoeffizienten als Parameter zu berechnen. In der Regel werden hierbei die letzten n+1 verwendeten Messwerte 5 in der letzten Abtastzeit der Verarbeitungseinheit, also hier der Antriebssteuerung, liegen, wie diese Fig. 5 zeigt. Die abgeleiteten Messwerte 6 (hier die Geschwindigkeit) und 7 (hier die Beschleunigung) werden durch das ermittelte Polynom bestimmt. Die verwendeten Messwerte für die Extrapolation können sich jedoch auch in vergangene Abtastzeiten der Verarbeitungseinheit 24 erstrecken.

Die Berechnung und Übertragung der Übertragungswerte 17, 18, 19 benötigt Zeit. Dies kann berücksichtigt werden, um die dynamische Leistung zu verbessern.

Je mehr direkte Messwerte 5 verwendet werden, umso genauer können die Parameter bestimmt werden, wenn sich die Bewegungsparameter nicht ändern. Um eine Veränderung der Bewegungsparameter während der Berechnung zu verfolgen (z.B. wenn sich die Beschleunigung während der Berechnung ändert), können zwei Berechnungen mit unterschiedlichen Mengen von Messwerten durchgeführt werden.

Dies zeigt Fig. 5. In Fig. 5 wurden dieselben Bezugszeichen wie zu Fig. 1 bis 4 verwendet und nicht noch einmal gesondert beschrieben. Die Ausführungen zu Fig. 1 bis 4 gelten daher zu Fig. 5 entsprechend.

Demnach wird zur Bildung des Übertragungswertes 17, 18, 19 versuchsweise ein erster Übertragungswert durch Extrapolation von einer ersten Anzahl 22 von vorangegangenen Messwerten 5 beispielsweise der letzten n+1 Messwerte, gebildet.

Zusätzlich wird ein zweiter Übertragungswert durch Extrapolation von einer zweiten Anzahl 23, wobei die zweite Anzahl 23 kleiner als die erste Anzahl 22 ist, beispielsweise der letzten n+1-M Messwerte (M>1), von vorangegangenen Messwerten 5 gebildet wird.

Fig. 5 zeigt beispielhaft die Situation für n=5 und M=2.

Als Übertragungswert 17 wird der erste Übertragungswert genommen, wenn eine Abweichung zwischen dem ersten Übertragungswert und dem zweiten Übertragungswert kleiner als ein Schwellwert ist. Andernfalls wird der zweite Übertragungswert als Übertragungswert 17 genommen.

Fig. 4 zeigt beispielhaft die Übertragungswerte 17, 18, 19, die an die Verarbeitungseinheit übermittelt werden.

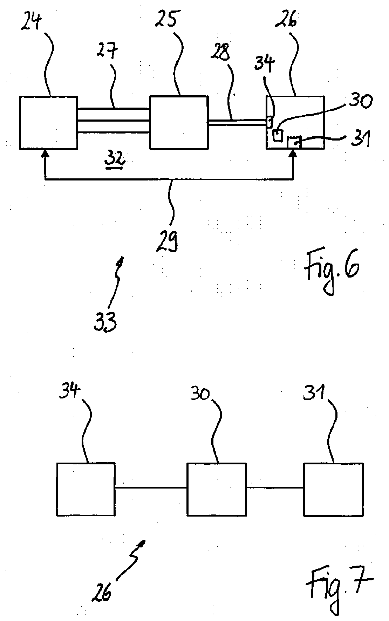

Fig. 6 zeigt in einer stark vereinfachten Prinzipdarstellung eine Messwert-Verarbeitungsvorrichtung 33.

Die Messwert-Verarbeitungsvorrichtung 33 hat eine Verarbeitungseinheit 24, hier beispielsweise ein Antriebsregler mit einer Endstufe, die über ein Motorleitungskabel 27 einen Aktuator 25, hier beispielsweise einen Motor, in an sich bekannter Weise ansteuert und mit Spulenströmen beaufschlagt.

Die Messwert-Verarbeitungsvorrichtung 33 hat weiter eine Messeinrichtung 26. Mit der Messeinrichtung 26 ist eine Drehbewegung oder eine sonstige Verstellbewegung des Aktuators 25 ermittelbar. Die Messeinrichtung 26 erzeugt somit direkte Messwerte 5, beispielsweise Positionen der genannten Verstellbewegung des Aktuators 25.

Die Messeinrichtung 26 ist über eine Signalstrecke 29 mit der Verarbeitungseinheit 24 verbunden.

Die Messeinrichtung 26 hat einen in Fig. 7 dargstellten Messsensor 34, mit dem die direkten Messwerte 5 aufgenommen werden. Weiter hat die Messeinrichtung 26 eine Übertragungswert-Bildungseinheit 30, mit welcher die bereits beschriebene Prognose der physikalischen Messgröße 8 für einen zukünftigen Zeitpunkt als Übertragungswert 17 berechenbar ist. Hierzu weist die Übertragungswert-Bildungseinheit 30 einen nicht weiter dargestellten Mikroprozessor auf, der in an sich bekannter Weise dazu eingerichtet ist, ein Polynom an eine Folge von direkten Messwerten 5 anzupassen, um den Übertragungswert 17 aus einem Wert des Polynoms zu dem zukünftigen Zeitpunkt auszulesen.

Der Mikroprozessor oder ein weiterer Mikroprozessor oder allgemein die Messeinrichtung 26 ist ferner zur Berechnung von abgeleiteten Messwerten 6, 7, beispielsweise einer zugehörigen Geschwindigkeit und/oder einer zugehörigen Beschleunigung, aus den direkten Messwerten 5 eingerichtet.

Hierzu können in an sich bekannter Weise zeitliche Ableitungen der Folge von direkten Messwerten gebildet werden. Bei dem beschriebenen Ausführungsbeispiel werden jedoch die Koeffizienten des berechneten Polynoms für die Prognose der physikalischen Messgröße 8 zusätzlich verwendet, um die abgeleiteten Messwerte 6, 7 und die zugehörigen Prognosen für zukünftige Zeitpunkte als Übertragungswerte 18, 19 zu erhalten. Diffentiationen sind so nicht erforderlich.

Über ein Übertragungsmittel 31 werden die Übertragungswerte 17, 18, 19 über die Signalstrecke 29 an die Verarbeitungseinheit 24 übermittelt.

Die Signalstrecke 29 ermöglicht somit eine Rückkopplung zu der Verarbeitungseinheit 24, wodurch eine Regelschleife 32 gebildet ist.

Bei einer Messeinrichtung mit einem Messwerte 5 einer zeitlich veränderlichen physikalischen Messgröße aufnehmenden Messsensor 34 wird vorgeschlagen, einen Übertragungswert 17, 18, 19 durch Extrapolation einer Folge von Messwerten 5, 6, 7 auf einen zukünftigen Zeitpunkt 16 zu berechnen und zur Übermittlung an eine Verarbeitungseinheit bereitzustellen.

**Bezugszeichenliste**

| | |
|---|---|
| 1 | Verarbeitungszeitpunkt |
| 2 | Abfrage |
| 3 | Berechnungsabschnitt |
| 4 | Messzeitpunkt |
| 5 | direkter Messwert |
| 6, 7 | abgeleiteter Messwert |
| 8, 9, 10 | physikalische Messgröße |
| 11 | Bereitstellungszeitpunkt |
| 12 | Pfeil |
| 13, 14, 15 | aktueller Messwert |
| 16 | zukünftiger Zeitpunkt |
| 17, 18, 19 | Übertragungswert |
| 20 | Extrapolationszeitdauer |

| 21 | Extrapolationsschritt |
| 22 | (erste) Anzahl |
| 23 | zweite Anzahl |
| 24 | Verarbeitungseinheit, beispielsweise Antriebsregler und Endstufe |
| 25 | Aktuator, beispielsweise Motor |
| 26 | Messeinrichtung |
| 27 | Motorleitungskabel |
| 28 | mechanische Kopplung |
| 29 | Signalstrecke, beispielsweise Kommunikationskabel |
| 30 | Übertragungswert-Bildungseinheit |
| 31 | Übertragungsmittel |
| 32 | Regelschleife |
| 33 | Messwert-Verarbeitungsvorrichtung |
| 34 | Messsensor |

**Patentansprüche**

1. Verfahren zur Erfassung einer zeitlich veränderlichen physikalischen Messgröße (8), wobei zu einer Abfolge von Messzeitpunkten (4) jeweils ein Messwert (5) der Messgröße (8) mit einem Messsensor (34) gemessen wird und zu den Messwerten (5) jeweils ein Übertragungswert (17) gebildet und über eine Signalstrecke an eine Verarbeitungseinheit übermittelt wird, wobei der Übertragungswert (17) zu jedem aktuell verarbeiteten Messwert (5) durch zeitliche Extrapolation einer Folge von dem Messwert zeitlich vorangegangen Messwerten (5) auf einen zukünftigen Zeitpunkt (16) gebildet wird und wobei ein Zeitabstand zwischen den Messzeitpunkten (4) zu zwei aufeinander folgenden Messwerten (5, 6, 7) für die Messwerte (5, 6, 7) konstant ist, wobei eine Zeitvariable der zeitlichen Extrapolation mit einer Abtastperiode skaliert wird.

2. Verfahren nach Anspruch 1, **dadurch gekennzeichnet, dass** der zukünftige Zeitpunkt (16) von dem Messzeitpunkt (4) des aktuell verarbeiteten Messwerts (13) wenigstens um eine Übertragungszeitspanne ($T_{Snd}$) für die Übermittlung des Übertragungswertes (17) über die Signalstrecke, insbesondere zusätzlich um eine Messzeitspanne ($T_{Pos}$) und/oder eine Bildungszeitspanne ($T_{Etr}$) zur Bildung des Übertragungswertes (17) zu einem Messwert und/oder ein Pufferzeitspanne ($T_{Res}$), zeitlich beabstandet ist.

3. Verfahren nach Anspruch 1 oder 2, **dadurch gekennzeichnet, dass** der Übertragungswert (17, 18, 19) als ein digitales Signal, insbesondere seriell, übermittelt wird.

4. Verfahren nach einem der Ansprüche 1 bis 3, **dadurch gekennzeichnet, dass** der Zeitabstand zwischen den Messzeitpunkten (4) zu zwei aufeinander folgenden Messwerten (5, 6, 7) kleiner als eine Zeitkonstante der zeitlich veränderlichen physikalischen Messgröße (8, 9, 10) ist und/oder dass ein Zeitabstand zwischen zwei Abfragen (2) kleiner als eine oder die Zeitkonstante der zeitlich veränderlichen physikalischen Messgröße (8, 9, 10) ist.

5. Verfahren nach einem der Ansprüche 1 bis 4, **dadurch gekennzeichnet, dass** in der Extrapolation eine Matrixmultiplikation einer Matrix mit Einträgen, die nur von dem zukünftigen Zeitpunkt (16) als Variable abhängen und in welche der zukünftige Zeitpunkt (16) eingesetzt wird, mit einer oder der als Vektor angeordneten Anzahl von Messwerten (5, 6, 7) berechnet wird und/oder dass für jede Extrapolation jeweils eine Anzahl von Messwerten (5, 6, 7) verwendet wird, die untereinander ein für alle Extrapolationen gleichbleibendes Muster von Zeitabständen einhalten, insbesondere die mit einer definierten Abtastrate und/oder jeweils um genau einen Zeitabstand voneinander beabstandet aufgenommen wurden.

6. Verfahren nach einem der Ansprüche 1 bis 5, **dadurch gekennzeichnet, dass** die Bildung des Übertragungswertes (17, 18, 19) jeweils durch eine vorzugsweise über die Signalstrecke übermittelte Abfrage (2) der Verarbeitungseinheit ausgelöst wird und/oder dass die oder eine Abfrage (2) der Verarbeitungseinheit vor einem Zeitpunkt, zu dem der Übertragungswert (17, 18, 19) in der Verarbeitungseinheit benötigt wird, an die Messeinrichtung gesendet wird.

7. Verfahren nach einem der Ansprüche 1 bis 6, **dadurch gekennzeichnet, dass** die physikalische Messgröße (8, 9, 10) eine Stellposition und/oder eine Stellgeschwindigkeit eines Antriebs ist und/oder dass der Übertragungswert zur Regelung der physikalischen Messgröße (8, 9, 10) verwendet wird.

**8.** Verfahren nach einem der Ansprüche 1 bis 7, **dadurch gekennzeichnet, dass** zur Bildung des Übertragungswertes (17, 18, 19) eine Extrapolation mit einem vorzugsweise kubischen oder quadratischen Polynom in einer Zeitvariablen (t) berechnet wird.

**9.** Verfahren nach einem der Ansprüche 1 bis 8, **dadurch gekennzeichnet, dass** zu jedem Messwert (5) Koeffizienten eines Polynoms, welches eine erste Anzahl von Messwerten (5) beschreibt, berechnet werden, insbesondere vor oder unabhängig von einer Abfrage (2) durch die Verarbeitungseinheit.

**10.** Verfahren nach Anspruch 9, **dadurch gekennzeichnet, dass** die Koeffizienten, welche das Polynom zur Beschreibung der ersten Anzahl von Messwerten (5, 6, 7) definieren, durch eine Matrixmultiplikation mit den Messwerten (5, 6, 7) berechnet werden.

**11.** Verfahren nach einem der Ansprüche 9 oder 10, **dadurch gekennzeichnet, dass** die Messwerte (5, 6, 7) mit einer Matrix multipliziert werden, die nur von einer Ordnung des Polynoms und der ersten Anzahl von Messwerten (5, 6, 7) abhängt.

**12.** Verfahren nach einem der Ansprüche 1 bis 11, **dadurch gekennzeichnet, dass** die Matrix durch eine Pseudo-Invertierung einer Rechteckmatrix mit Einträgen von zeilenweise ansteigenden Potenzen einer jeweiligen Zeilennummer gebildet ist.

**13.** Verfahren nach einem der Ansprüche 1 bis 12, **dadurch gekennzeichnet, dass** die Anzahl der Messwerte (6, 7, 8) größer als 2 ist und/oder dass die Matrix für alle Berechnungen mit festen Einträgen hinterlegt ist.

**14.** Verfahren nach einem der Ansprüche 1 bis 13, **dadurch gekennzeichnet, dass** nach Erhalt einer Abfrage (2) der Übertragungswert (17, 18, 19) durch eine Extrapolation mit den Koeffizienten zu dem aktuell verarbeiteten Messwert (13, 14, 15) gebildet wird.

**15.** Verfahren nach einem der Ansprüche 1 bis 14, **dadurch gekennzeichnet, dass** in der Extrapolation durch eine Matrixmultiplikation jeweils ein Übertragungswert (17, 18, 19) und wenigstens eine zugehörige zeitliche Ableitung, insbesondere eine Position, eine Geschwindigkeit und/oder eine Beschleunigung, berechnet werden.

**16.** Verfahren nach einem der Ansprüche 1 bis 15, **dadurch gekennzeichnet, dass** die Extrapolation durch eine Matrixmultiplikation der Koeffizienten mit einer Extrapolationsmatrix mit Einträgen, die nur von dem zukünftigen Zeitpunkt (16), der Abtastperiode (T) und der Anzahl (n) von Messwerten (5) abhängen und in welche der zukünftige Zeitpunkt (16) eingesetzt wird, gebildet wird.

**17.** Verfahren nach einem der Ansprüche 1 bis 16, **dadurch gekennzeichnet, dass** in der Extrapolation zunächst eine Position und eine Geschwindigkeit und insbesondere zusätzlich eine Beschleunigung berechnet werden.

**18.** Verfahren nach einem der Ansprüche 1 bis 17, **dadurch gekennzeichnet, dass** zu den Messwerten (5) abgeleitete Messwerte (6, 7) einer physikalischen Messgröße (9, 10), die als eine Funktion, insbesondere als eine zeitliche Ableitung erster, zweiter oder höherer Ordnung, der physikalischen Messgröße (8) der Messwerte (5) beschreibbar ist, berechnet werden, indem das oder ein an die Messwerte (5) angepasstes Polynom verarbeitet und/oder ausgewertet wird.

**19.** Verfahren nach einem der Ansprüche 1 bis 18, **dadurch gekennzeichnet, dass** zur Bildung des Übertragungswertes (17, 18, 19) versuchsweise ein erster Übertragungswert durch Extrapolation von der oder einer ersten Anzahl (22) von vorangegangenen Messwerten (5) und ein zweiter Übertragungswert durch Extrapolation von einer zweiten Anzahl (23), wobei die zweite Anzahl (23) kleiner als die erste Anzahl (22) ist, von vorangegangenen Messwerten (5) gebildet wird und dass als Übertragungswert (17, 18, 19) der erste Übertragungswert genommen wird, wenn eine Abweichung zwischen dem ersten Übertragungswert und dem zweiten Übertragungswert kleiner als ein Schwellwert ist, und dass andernfalls der zweite Übertragungswert als Übertragungswert (17, 18, 19) genommen wird.

**20.** Messeinrichtung mit einem Messsensor (34), wobei der Messsensor (34) zu einer Messung von Messwerten (5) einer zeitlich veränderlichen physikalischen Messgröße (8) zu bestimmten Messzeitpunkten (4) eingerichtet ist, einer Übertragungswert-Bildungseinheit, welche zu einer Bildung eines Übertragungswertes (17, 18, 19) zu jedem Messwert (5) eingerichtet ist, und Übertragungsmitteln, die zur Übermittlung der gebildeten Übertragungswerte (17, 18, 19) über eine Signalstrecke eingerichtet ist, wobei die Übertragungswert-Bildungseinheit zu einer Bildung des Übertragungswerts (17, 18, 19) zu jedem aktuell verarbeiteten Messwert (13, 14, 15) als zeitliche Extrapolation einer Folge von dem Messwert (13, 14, 15) zeitlich vorangegangen Messwerten (5) auf einen zukünftigen Zeitpunkt (16) eingerichtet ist und wobei Mittel zur Ausführung eines Verfahrens nach einem der Ansprüche 1 bis 19 ausgebildet sind.

21. Messwert-Verarbeitungsvorrichtung, mit einer Messeinrichtung, einer Verarbeitungseinheit und einer zwischen der Messeinrichtung und der Verarbeitungseinheit eingerichteten Signalstrecke, **dadurch gekennzeichnet, dass** die Messeinrichtung nach Anspruch 20 und/oder zur Ausführung eines Verfahrens nach einem der Ansprüche 1 bis 19 eingerichtet ist.

22. Messwert-Verarbeitungsvorrichtung nach Anspruch 21, **dadurch gekennzeichnet, dass** die Signalstrecke Teil einer Regelschleife ist und/oder dass die Messeinrichtung ein Encoder und/oder die Verarbeitungseinheit Teil einer Antriebsregeleinheit ist.

### Claims

1. Method of detecting a time-variable physical measurement variable (8), wherein with respect to a sequence of measurement times (4) in each case a measurement value (5) of the measurement variable (8) is measured by a measuring sensor (34) and with respect to the measurement values (5) in each case a transmission value (17) is formed and communicated via a signal path to a processing unit, wherein the transmission value (17) with respect to each currently processed measurement value (5) is formed by time-extrapolation of a series of measurement values (5), which precede the measurement value in time, to a future time (16) and wherein a time interval between the measurement times (4) with respect to two consecutive measurement values (5, 6, 7) is constant for the measurement values (5, 6, 7), wherein a time variable of the time-extrapolation is scaled with a scanning period.

2. Method as claimed in claim 1, **characterised in that** the future time (16) is spaced apart in time from the measurement time (4) of the currently processed measurement value (13) at least by a transmission time period ($T_{Snd}$) for communicating the transmission value (17) via the signal path, in particular in addition by a measurement time period ($T_{Pos}$) and/or a formation time period ($T_{Etr}$) for forming the transmission value (17) into a measurement value and/or a buffer time period ($T_{Res}$).

3. Method as claimed in claim 1 or 2, **characterised in that** the transmission value (17, 18, 19) is communicated as a digital signal, in particular in a serial manner.

4. Method as claimed in any one of claims 1 to 3, **characterised in that** the time interval between the measurement times (4) with respect to two consecutive measurement values (5, 6, 7) is less than a time constant of the time-variable physical measurement variable (8, 9, 10), and/or **in that** a time interval between two queries (2) is less than a or the time constant of the time-variable physical measurement variable (8, 9, 10).

5. Method as claimed in any one of claims 1 to 4, **characterised in that** in the extrapolation a matrix multiplication of a matrix with entries, which depend only on the future time (16) as a variable and into which the future time (16) is inserted, is calculated with a or the number of measurement values (5, 6, 7) arranged as a vector and/or **in that** for each extrapolation in each case a number of measurement values (5, 6, 7) is used which amongst one another adhere to a pattern of time intervals which is constant for all extrapolations, in particular which have been recorded at a defined scanning rate and/or in each case spaced apart from one another by precisely one time interval.

6. Method as claimed in any one of claims 1 to 5, **characterised in that** the formation of the transmission value (17, 18, 19) is triggered in each case by a query (2) of the processing unit which is communicated preferably via the signal path and/or **in that** the or a query (2) of the processing unit is sent to the measuring device prior to the time at which the transmission value (17, 18, 19) is required in the processing unit.

7. Method as claimed in any one of claims 1 to 6, **characterised in that** the physical measurement variable (8, 9, 10) is an adjustment position and/or an adjustment speed of a drive and/or **in that** the transmission value is used for controlling the physical measurement variable (8, 9, 10).

8. Method as claimed in any one of claims 1 to 7, **characterised in that**, in order to form the transmission value (17, 18, 19), an extrapolation is calculated with a preferably cubic or quadratic polynomial in a time variable (t).

9.  Method as claimed in any one of claims 1 to 8, **characterised in that** with respect to each measurement value (5) coefficients of a polynomial, which describes a first number of measurement values (5), are calculated, in particular prior to or independently of a query (2) by the processing unit.

10. Method as claimed in claim 9, **characterised in that** the coefficients which define the polynomial for describing the first number of measurement values (5, 6, 7) are calculated by a matrix multiplication with the measurement values (5, 6, 7).

11. Method as claimed in any one of claims 9 or 10, **characterised in that** the measurement values (5, 6, 7) are multiplied with a matrix which depends only on an order of the polynomial and the first number of measurement values (5, 6, 7).

12. Method as claimed in any one of claims 1 to 11, **characterised in that** the matrix is formed by means of a pseudo inversion of a rectangular matrix with entries of powers of a respective line number which increase linearly.

13. Method as claimed in any one of claims 1 to 12, **characterised in that** the number of measurement values (6, 7, 8) is greater than 2 and/or **in that** the matrix is stored for all calculations with fixed entries.

14. Method as claimed in any one of claims 1 to 13, **characterised in that**, upon receipt of a query (2), the transmission value (17, 18, 19) is formed by means of an extrapolation with the coefficients into the currently processed measurement value (13, 14, 15).

15. Method as claimed in any one of claims 1 to 14, **characterised in that** in each case a transmission value (17, 18, 19) and at least one associated time derivation, in particular a position, a speed and/or an acceleration, are calculated in the extrapolation by means of a matrix multiplication.

16. Method as claimed in any one of claims 1 to 15, **characterised in that** the extrapolation is formed by means of a matrix multiplication of the coefficients with an extrapolation matrix with entries which depend only on the future time (16), the scanning period (T) and the number (n) of measurement values (5) and into which the future time (16) is inserted.

17. Method as claimed in any one of claims 1 to 16, **characterised in that** initially a position and a speed and in particular in addition an acceleration are calculated in the extrapolation.

18. Method as claimed in any one of claims 1 to 17, **characterised in that** measurement values (6, 7), derived with respect to the measurement values (5), of a physical measurement variable (9, 10) which can be described as a function, in particular as a first-order, second-order or higher-order time derivation, of the physical measurement variable (8) of the measurement values (5) are calculated **in that** the or a polynomial which is adapted to the measurement values (5) is processed and/or evaluated.

19. Method as claimed in any one of claims 1 to 18, **characterised in that**, in order to form the transmission value (17, 18, 19), experimentally a first transmission value is formed by extrapolation of the or a first number (22) of preceding measurement values (5) and a second transmission value is formed by extrapolation of a second number (23), wherein the second number (23) is smaller than the first number (22), of preceding measurement values (5) and **in that** the first transmission value is taken as the transmission value (17, 18, 19) if a deviation between the first transmission value and the second transmission value is less than a threshold value and **in that** otherwise the second transmission value is taken as the transmission value (17, 18, 19).

20. Measuring device comprising a measuring sensor (34), wherein the measuring sensor (34) is configured for measuring measurement values (5) of a time-variable physical measurement variable (8) at specific measurement times (4), a transmission value formation unit which is configured to form a transmission value (17, 18, 19) with respect to each measurement value (5), and transmission means which are configured to communicate the formed transmission values (17, 18, 19) via a signal path, wherein the transmission value formation unit is configured to form the transmission value (17, 18, 19) with respect to each currently processed measurement value (13, 14, 15) as a time extrapolation of a series of measurement values (5), which precede the measurement value (13, 14, 15) in time, to a future time (16) and wherein means are formed for carrying out a method as claimed in any one of claims 1 to 19.

21. Measurement value processing apparatus comprising a measuring device, a processing unit and a signal path configured between the measuring device and the processing unit, **characterised in that** the measuring device is configured as claimed in claim 20 and/or for carrying out a method as claimed in any one of claims 1 to 19.

22. Measurement value processing apparatus as claimed in claim 21, **characterised in that** the signal path is part of a control loop and/or **in that** the measuring device is an encoder and/or the processing unit is part of a drive control unit.

## Revendications

1. Procédé pour déterminer une grandeur de mesure physique variable dans le temps (8), dans lequel, à une succession d'instants de mesure (4), on mesure chaque fois une valeur de mesure (5) de la grandeur de mesure (8) avec un capteur de mesure (34) et on forme pour les valeurs de mesure (5) chaque fois une valeur de transfert (17) et on la transmet par une section de signalisation à une unité de traitement, dans lequel on forme la valeur de transfert (17) pour la valeur de mesure actuellement traitée (5) par extrapolation temporelle d'une suite de valeurs de mesure (5) précédant dans le temps la valeur de mesure à un instant futur (16) et dans lequel un intervalle de temps entre les instants de mesure (4) pour deux valeurs de mesure successives (5, 6, 7) est constant pour les valeurs de mesure (5, 6, 7), dans lequel une variable de temps de l'extrapolation temporelle est mise à l'échelle avec une période d'échantillonnage.

2. Procédé selon la revendication 1, **caractérisé en ce que** l'instant futur (16) est temporellement espacé de l'instant de mesure (4) de la valeur de mesure actuellement traitée (13) d'au moins un laps de temps de transfert (Tsnd) pour la transmission de la valeur de transfert (17) par la section de signalisation, en particulier en sus d'un laps de temps de mesure ($T_{Pos}$) et/ou d'un laps de temps de formation ($T_{Etr}$) pour la formation de la valeur de transfert (17) pour une valeur de mesure et/ou d'un laps de temps de tampon ($T_{Res}$).

3. Procédé selon la revendication 1 ou 2, **caractérisé en ce que** l'on transmet la valeur de transfert (17, 18, 19) sous forme de signal numérique, notamment sériel.

4. Procédé selon l'une quelconque des revendications 1 à 3, **caractérisé en ce que** l'intervalle de temps entre les instants de mesure (4) pour deux valeurs de mesure successives (5, 6, 7) est plus petit qu'une constante de temps de la grandeur de mesure physique variable dans le temps (8, 9, 10) et/ou **en ce qu'**un intervalle de temps entre deux demandes (2) est plus petit qu'une ou que la constante de temps de la grandeur de mesure physique variable dans le temps (8, 9, 10).

5. Procédé selon l'une quelconque des revendications 1 à 4, **caractérisé en ce que**, dans l'extrapolation, on calcule une multiplication matricielle d'une matrice avec des entrées, qui ne dépendent que de l'instant futur (16) comme variable et dans lesquelles on introduit l'instant futur (16), avec un ou le nombre de valeurs de mesure (5, 6, 7) disposé comme vecteur et/ou **en ce que** l'on utilise pour chaque extrapolation chaque fois un nombre de valeurs de mesure (5, 6, 7) qui contiennent un motif d'intervalles de temps identique l'un à l'autre pour toutes les extrapolations, en particulier qui sont enregistrées avec une vitesse d'échantillonnage définie et/ou chaque fois espacées l'une de l'autre exactement d'un intervalle de temps.

6. Procédé selon l'une quelconque des revendications 1 à 5, **caractérisé en ce que** l'on déclenche la formation de la valeur de transfert (17, 18, 19) respectivement par une demande (2) de l'unité de traitement transmise de préférence par la section de signalisation et/ou **en ce que** l'on envoie la ou une demande (2) de l'unité de traitement au dispositif de mesure avant un instant auquel la valeur de transfert (17, 18, 19) est nécessaire dans l'unité de traitement.

7. Procédé selon l'une quelconque des revendications 1 à 6, **caractérisé en ce que** la grandeur de mesure physique (8, 9, 10) est une position de réglage et/ou une vitesse de réglage d'un entraînement et/ou **en ce que** l'on utilise la valeur de transfert pour la régulation de la grandeur de mesure physique (8, 9, 10).

8. Procédé selon l'une quelconque des revendications 1 à 7, **caractérisé en ce que** l'on calcule pour la formation de la valeur de transfert (17, 18, 19) une extrapolation avec un polynôme de préférence cubique ou carré en une variable de temps (t).

9. Procédé selon l'une quelconque des revendications 1 à 8, **caractérisé en ce que** l'on calcule pour chaque valeur de mesure (5) des coefficients d'un polynôme, qui décrit un premier nombre de valeurs de mesure (5), en particulier avant ou indépendamment d'une demande (2) par l'unité de traitement.

10. Procédé selon la revendication 9, **caractérisé en ce que** l'on calcule les coefficients qui définissent le polynôme pour la description du premier nombre de valeurs de mesure (5, 6, 7) par une multiplication de matrice avec les valeurs de mesure (5, 6, 7).

11. Procédé selon une des revendications 9 ou 10, **caractérisé en ce que** l'on multiplie les valeurs de mesure (5, 6, 7) avec une matrice, qui ne dépend que d'un ordre du polynôme et du premier nombre de valeurs de mesure (5, 6, 7).

12. Procédé selon l'une quelconque des revendications 1 à 11, **caractérisé en ce que** la matrice est formée par une pseudo-inversion d'une matrice rectangulaire avec des entrées de puissances croissantes par ligne d'un numéro de ligne respectif.

13. Procédé selon l'une quelconque des revendications 1 à 12, **caractérisé en ce que** le nombre des valeurs de mesure (6, 7, 8) est plus grand que 2 et/ou **en ce que** la matrice est mémorisée avec des entrées fixes pour tous les calculs.

14. Procédé selon l'une quelconque des revendications 1 à 13, **caractérisé en ce qu'**après réception d'une demande (2), on forme la valeur de transfert (17, 18, 19) par une extrapolation avec les coefficients relatifs à la valeur de mesure actuellement traitée (13, 14, 15).

15. Procédé selon l'une quelconque des revendications 1 à 14, **caractérisé en ce que**, dans l'extrapolation par une multiplication de matrice, on calcule chaque fois une valeur de transfert (17, 18, 19) et au moins une dérivée temporelle correspondante, en particulier une position, une vitesse et/ou une accélération.

16. Procédé selon l'une quelconque des revendications 1 à 15, **caractérisé en ce que** l'on forme l'extrapolation par une multiplication de matrice des coefficients avec une matrice d'extrapolation avec des entrées, qui ne dépendent que de l'instant futur (16), de la période d'échantillonnage (T) et du nombre (n) de valeurs de mesure (5) et dans lesquelles l'instant futur (16) est introduit.

17. Procédé selon l'une quelconque des revendications 1 à 16, **caractérisé en ce que** l'on calcule dans l'extrapolation d'abord une position et une vitesse et, en particulier, en plus une accélération.

18. Procédé selon l'une quelconque des revendications 1 à 17, **caractérisé en ce que** l'on calcule pour les valeurs de mesure (5) des valeurs de mesure dérivées (6, 7) d'une grandeur de mesure physique (9, 10), qui peut être décrite comme une fonction, en particulier comme une dérivée temporelle du premier ordre, du deuxième ordre ou d'un ordre plus élevé, de la grandeur de mesure physique (8) des valeurs de mesure (5), par le fait que l'on traite et/ou on évalue un polynôme adapté aux valeurs de mesure (5).

19. Procédé selon l'une quelconque des revendications 1 à 18, **caractérisé en ce que**, pour la formation de la valeur de transfert (17, 18, 19), on forme à titre d'essai une première valeur de transfert par extrapolation du ou d'un premier nombre (22) de valeurs de mesure antérieures (5) et une deuxième valeur de transfert par extrapolation d'un deuxième nombre (23), le deuxième nombre (23) étant plus petit que le premier nombre (22), de valeurs de mesure antérieures (5) et **en ce que** l'on prend comme valeur de transfert (17, 18, 19) la première valeur de transfert lorsqu'un écart entre la première valeur de transfert et la deuxième valeur de transfert est inférieur à une valeur de seuil et **en ce que**, dans le cas contraire, on prend la deuxième valeur de transfert comme valeur de transfert (17, 18, 19).

20. Dispositif de mesure avec un capteur de mesure (34), dans lequel le capteur de mesure (34) est conçu pour une mesure de valeurs de mesure (5) d'une grandeur physique variable dans le temps (8) à des instants de mesure déterminés (4), avec une unité de formation de valeur de transfert, qui est conçue pour une formation d'une valeur de transfert (17, 18, 19) pour chaque valeur de mesure (5), et avec des moyens de transmission, qui sont conçus pour la transmission des valeurs de transfert formées (17, 18, 19) par une section de signalisation, dans lequel l'unité de formation de valeur de transfert est conçue pour une formation de la valeur de transfert (17, 18, 19) pour chaque valeur de mesure actuellement traitée (13, 14, 15) comme une extrapolation temporelle d'une suite de valeurs de mesure (5) temporellement antérieures à la valeur de mesure (13, 14, 15) à un instant futur (16) et dans lequel des moyens sont configurés pour la mise en oeuvre d'un procédé selon l'une quelconque des revendications 1 à 19.

**21.** Dispositif de traitement de valeurs de mesure avec un dispositif de mesure, une unité de traitement et une section de signalisation établie entre le dispositif de mesure et l'unité de traitement, **caractérisé en ce que** le dispositif de mesure est configuré selon la revendication 20 et/ou pour la mise en oeuvre d'un procédé selon l'une quelconque des revendications 1 à 19.

**22.** Dispositif de traitement de valeurs de mesure selon la revendication 21, **caractérisé en ce que** la section de signalisation fait partie d'une boucle de régulation et/ou **en ce que** le dispositif de mesure est un encodeur et/ou **en ce que** l'unité de traitement fait partie d'une unité de régulation de l'entraînement.

$T_{Pos}$    $T_{Silence}$

Fig. 1

$T_{Cmd}$

$T_{Req}$ $T_{Chk}$

$T_{Etr}$   $T_{Snd}$   $T_{Rec}$

$T_{Pos}$

$T_{Elap}$

$T_{Exp}$

Fig. 2

Fig. 3

Fig. 4

Fig. 5

EP 3 120 112 B1

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041912 A1
- EP 1098236 A2
- DE 102006008634 A1
- DE 102011005128 A1